# EUROPEAN PATENT SPECIFICATION

(11) **EP 0 513 922 B1**
(45) Date of publication and mention of the grant of the patent: **27.03.1996**
(21) Application number: 92201359.4
(22) Date of filing: 12.05.1992
(51) Int. Cl.: A23L 3/3463, A23D 7/00, A23C 19/11, A61K 7/48, A01N 25/04

(54) **Coating for foods and agricultural products to prevent the growth of moulds**
Überzug zur Verhinderung des Wachstums von Schimmel in Nahrungs- und Landwirtschaftsprodukten
Enroulage pour produits agricoles et alimentaires pour prévenir la croissance des moisissures

(30) Priority: 17.05.1991 EP 91201210
(43) Date of publication of application: 19.11.1992
(73) Proprietor: GIST-BROCADES N.V., NL-2600 MA Delft (NL)
(72) Inventor: Tan, Hong Sheng, NL-2665 TG Bleiswijk (NL); van Rijn, Ferdinand Theodorus Jozef, NL-2623 HM Delft (NL); Dijkgraaf, Bernardus Leonardus Johannes, NL-2623 GW Delft (NL); de Haan, Ben Rudolf, NL-2272 EN Voorburg (NL)

(56) References cited:
- BE-A- 669 106
- DE-A- 3 035 646
- FR-A- 2 371 149
- US-A- 2 703 288
- US-A- 4 649 057
- VOEDINGSMIDDELEN TECHNOLOGIE. vol. 18, no. 2, 24 January 1985, ZEIST NL pages 26 - 29; C.B.G. DAAMEN ET AL.: 'Voorkoming van schimmelgroei op de korst van kaas met behulp van natamycine'

## Description

### FIELD OF THE INVENTION

The present invention relates to antifungal preparations to be used on foods, such as cheese or sausages; or on agricultural products, such as fruit, vegetables, tubers and flower bulbs; or for pharmaceutical or cosmetic treatment; and to a method for treating these foods and agricultural products with such preparations; and to foods and agricultural products so treated. The invention relates particularly to oil in water emulsions containing a suitable antifungal agent and to methods for the preparation of such emulsions and to a method for controlled release of such antifungal agent from such emulsion.

### BACKGROUND OF THE INVENTION

For more than 20 years natamycin has been used to prevent growth of moulds on cheese and sausages. References are:
1. Daamen, C.B.G. and Berg, G van den; "Prevention of mould growth on cheese by means of natamycin." Voedingsmiddelentechnologie, **18** (2), 26-29, (1985).
2. Oostendorp, J.G.; "Natamycin", Antonie van Leeuwenhoek, **47** (2), 170-171, (1981)
3. Neviani, E.; Emaldi, G.C.; Carini, S.; "Use of pimaricin as a fungicide on cheese rind: technology and the effects on the cheese surface flora." Latte, **6** (5), 335-343, (1981)
4. Holley, R.A.; "Prevention of surface mould growth on Italian dry sausage by natamycin and potassium sorbate." Applied and Environmental Microbiology, **41** (2), 422-429, (1981)
5. Morris, H.A.; Castberg, H.B.; "Control of surface growth on Blue cheese using pimaricin". Cultured Dairy Products Journal, **15** (2), 21-23, (1980)
6. Baldini, P.; Palmia, F.; Raczynski, R.G.; Campanini, M.; "Use of pimaricin for preventing mould growth on Italian cured meat products." Industria Conserve, **54** (4), 305-307, (1979)
7. Lueck, H.; Cheesman, C.E.; "Mould growth on cheese as influenced by pimaricin (natamycin) or sorbate treatments." South African Journal of Dairy Technology, **10** (3), 143-146, (1978)
It is known in the art, that e.g. cheeses are treated by immersion in a suspension of natamycin in water or covered by an emulsion of plastic in water, (mostly polyvinylacetate). Sausages are mainly treated by immersion or by spray coating with a suspension of natamycin in water.

A disadvantage of immersion is the necessity of a large scale preparation of immersion liquid. This means a considerable spillage of immersion liquid, as in most cases the left over fluid cannot be re-used due to "pollution" by cheese ingredients and the limited stability of the liquid caused by bacterial contamination. This means non-economical use of the preparation and causes an environmental burden.

Also, fatty surfaces like the surface of a GRANA type of cheese or of sausages cannot be covered homogeneously, which means there is no optimal protection against the growth of moulds. Addition of a surface active agent (like sodium lauryl sulphate or a polyoxyethylene ester) will be useful in some cases, but mostly the effect is insufficient and/or such treatment is yielding a sticky surface.

Natamycin containing plastic coatings are applicated on hard cheeses like the "Gouda" type. Unlike immersion, plastic coating of cheese has the advantage that the surface of the cheese can be treated by spunging the emulsion, so there is no contaminated left over. Applying plastic coating is economically attractive as the coating reduces loss of moisture and does not negatively effect the development of taste. Reference:
8. Ruig, W.G.; Berg, G. van den; "Influence of the fungicides sorbate and natamycin in cheese coatings on the quality of the cheese." Netherlands Milk and Dairy Journal, **39** (3), 165-172, (1985)

Besides, a plastic coating gives a cheese a nice, glossy appearance. In cheese handling, conservation by means of natamycin containing plastic coating has become a common practice because of extremely good results. However, it is a definite disadvantage, that these coatings cannot be considered as edible and thus have to be removed from the surface of the cheese prior to consumption. In practice it is not possible just to remove the coating: Part of the cheese will go with it. Also, because of being unfit for consumption, coating should not be used on soft cheese as the cheese rind is not removed. Besides, coating of soft cheese causes an unnatural appearance.

Further, spray coating is very difficult due to frequent blockage of spray-nozzles. Still another disadvantage is the slow drying of the coating. In practice, first one side of the cheese is treated and after standing overnight for drying, the other side is covered with the coating.

Normally, in the initial period of storage, cheese or sausage must be treated with natamycin several times, the reason being, that in the initial period cheese and sausage are still very moist and therefore very sensitive to contamination by moulds.

For application on foods and especially for application on cheese, in case plastic coating is not desirable, the quality of the composition has to meet specific requirements.

Firstly, the maintenance of a constant level of active natamycin, sufficient to prevent the growth of moulds over a considerable period of time.

Secondly, for foods, the ingredients in the composition should conform to "the E numbers classification" (official admission as food additive by the European Community, as established by the pertaining Food Additive Directives of the European Commission).

Furthermore, after application the coating should be strong enough to prevent damage due to handling and the "cosmetic" aspect of the coating should be highly acceptable.

Emulsions of the oil in water type are formulations with several advantages: concentrates can easily be diluted with water to any desired concentration and application may occur in several convenient manners e.g. for cheese by spreading the emulsion with a spunge, by immersion of the cheese in the emulsion or by applicating the emulsion by means of spraying device.

It is generally accepted that the release of an active ingredient from a medium depends to a considerable extent of the composition of the carrier in which such active ingredient is contained as well as of the diffusion rate of the active ingredient itself.

BE-A-669106 discloses a process for preparing oil-in-water and water-in-oil emulsions, suitable for spraying onto agricultural products, comprising an oil phase, an aqueous phase one, or both of those phases may comprise a fungicide and an emulsifier system comprising e.g. a monoglyceride and a sorbitan fatty acid ester.

US-A-2703288 discloses an emulsion of the oil-in-water type (the fat phase is dispersed) for treating fruits, containing a water-soluble mould inhibiting agent present in the aqueous phase, a combination of non-ionic and anionic emulsifiers and fat e.g. paraffin oil which is solid at ambient temperature.

DE-A-3035646 discloses the method of sterilising cork with an active substance such as natamycin, and mentions a very broad scala of possibilities how the active compound can be used without giving any details. It mentions that the 'Trägersubstanz' for the active substance is an oil or wax, or an organic solvent or a mixture of the solvent, oil or wax. This 'Trägersubstanz' may contain water. A sliding agent can be added in order to bring the active substance into a solution, emulsion, pasta or as a solid form on the cork.

### SUMMARY OF THE INVENTION

This invention provides oil in water emulsions suitable for use as edible antifungal coating for foods, such as cheese or sausages. Also the invention provides oil in water emulsions suitable as an antifungal coating for agricultural products like fruits, vegetables, tubers and flower bulbs. Equally, the invention provides oil in water emulsions suitable for pharmaceutical or cosmetic treatment of human or animal skin. These emulsions can be provided in various ways. A preferred embodiment is a natamycin emulsion concentrate that can be diluted with water by the user to any desired concentration. Also the emulsion may be provided as a blank base in order to incorporate natamycin in any desired concentration directly before use.

Further, this invention provides methods for preparation of such emulsions. And a method for treating foods and agricultural products with such emulsions. And foods and agricultural products so treated.

### BRIEF DESCRIPTION OF THE FIGURES

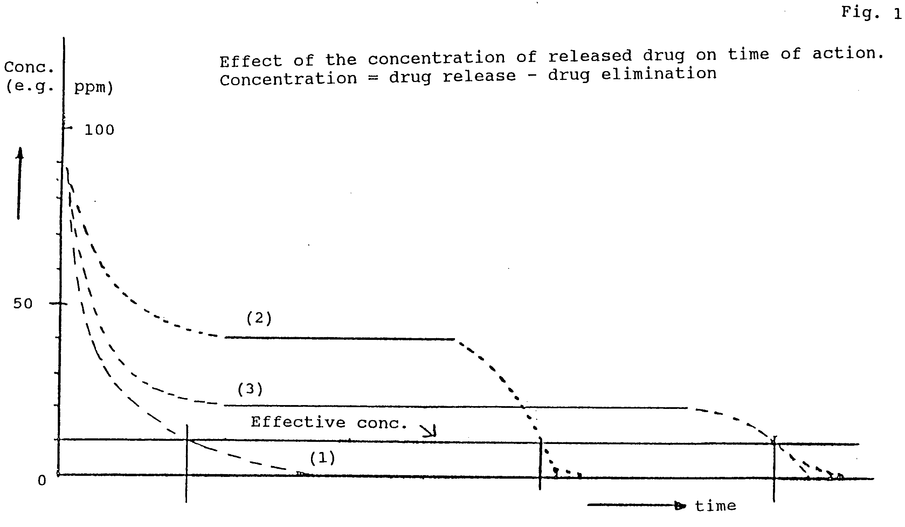

Figure 1 illustrates the principle of the effect of controlled release of an active component on the time of action of such component (e.g. natamycin).

The solubility of natamycin was supposed to be 50 ppm. At the beginning the solution was "over"-saturated, starting with a dissolved amount of natamycin higher than the solubility value of 50 ppm.

Curve (1) illustrates the situation at a concentration of about 100 ppm of natamycin. By elimination processes the dissolved amount of natamycin will decrease gradually until it drops beneath the effective concentration (about 10 ppm).

Curve (2) illustrates the effect of increased natamycin concentration in suspension. At first the dissolved amount will decrease in the same way as in case 1. However, the presence of the solid undissolved natamycin in the suspension will serve as a depot. When the dissolved amount drops to a value of about 50 ppm this value will be maintained until all the solid natamycin has been dissolved. Then the concentration will gradually decrease and drop beneath the effective concentration. The total effect is an extended effectivity.

Curve (3) illustrates what will happen with a controlled released natamycin, provided that the release is such that the dissolved concentration of natamycin is kept between the effective concentration and the concentration at saturation. With the same amount of natamycin in suspension as in case (2), the time of action will be further extended. The area under curve (3) must be equal to the area under curve (2).

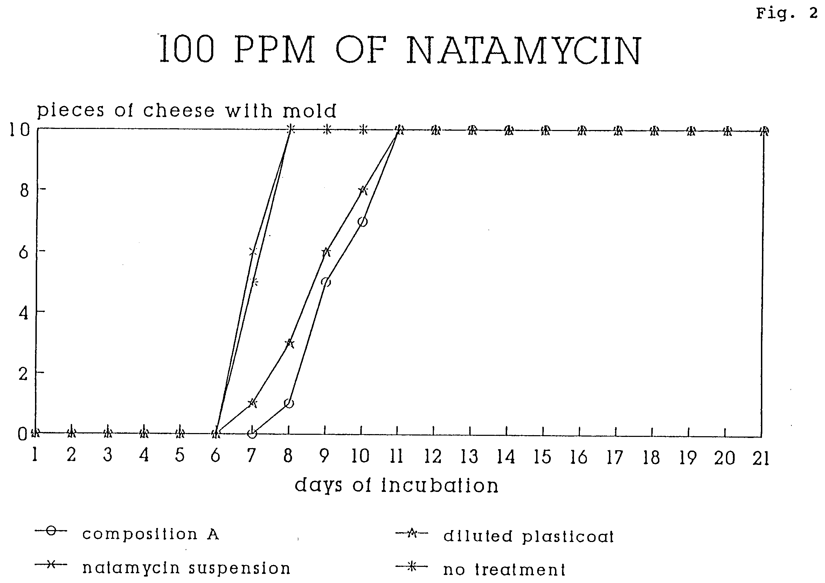

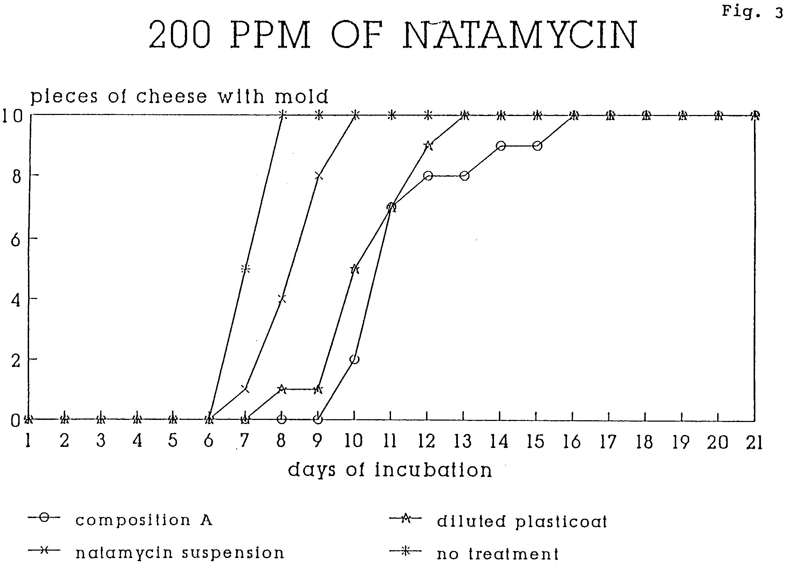

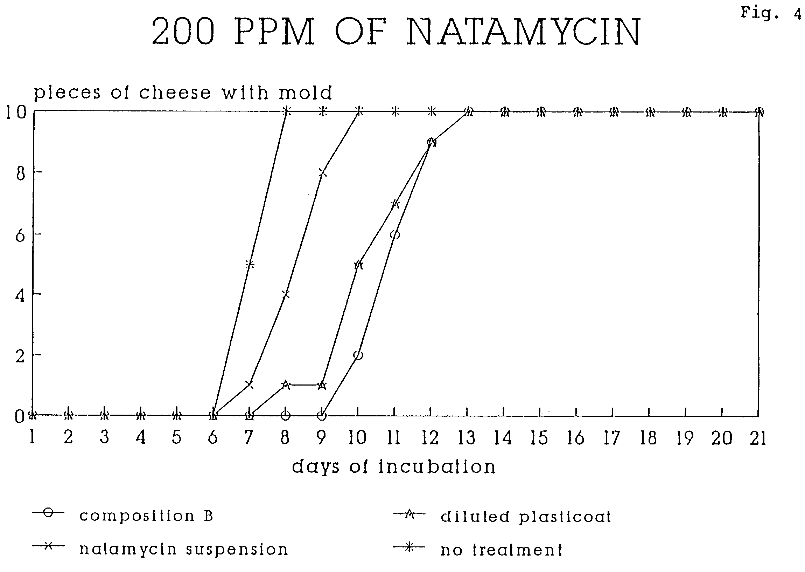

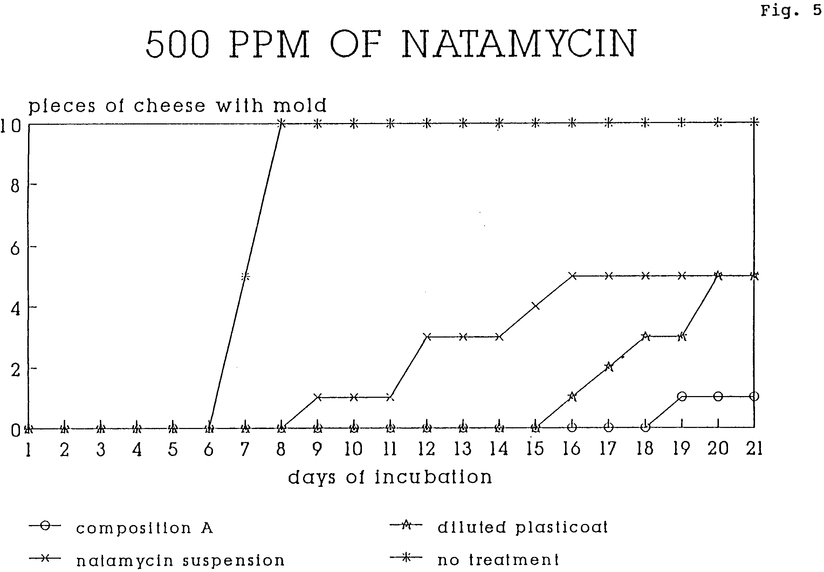

Figures 2, 3, 4 and 5 show the mould inhibiting properties of various natamycin compositions at values of 100 ppm, 200 ppm and 500 ppm of natamycin in suspension respectively. The compositions A and B are specified in Table 1 (page 16).

### DETAILS OF THE INVENTION

The emulsion according to this invention is one that contains an antifungal agent, e.g. natamycin. Alternatively, the antifungal agent may be added to the emulsion just before use. Instead of natamycin, or in combination with natamycin, other suitable antifungal compounds such as Imazalil, Lucensomycin, Amphotericin B or Nystatin may be applied.

Further the emulsion contains water, a suitable emulsifier, solid fats, and optionally a co-emulsifier, a thickening agent, a buffering system, and a preservative.

Emulsifiers are a variety of substances, able to create a link between fats and water, due to their hydrophilic as well as their lipophilic properties. Especially suitable for emulsification are polyethylene alkyl ethers, e.g. Cetomacrogol® 1000, polyoxyethylene sorbitan fatty acid esters, e.g. Tween® 60, 61 and 65, and/or anionic tensides, e.g. sodium lauryl sulphate and the dairy-related sodium caseinate or whey protein. The emulsifying agent in a ready to use emulsion is used in amounts of 0.1 - 15%, preferably 0.25 - 5.0%, and more preferably 0.25 - 1.0%. Accordingly, amounts of emulsifier in a concentrated emulsion can vary between 0.5 and 30%, more preferably between 2.5 and 20%.

The solid fats used are preferably edible fats, at least when used in food applications. Suitable fats are triglycerides on a base of coconut- or palm kernel oil, e.g. compositions known under the brand names of Witocan®, Witepsol® and Toffix® (Dynamite Nobel), concentrates of butter fat or similar products.

After emulsification these fats form the solid phase in the preparation. A very useful property of these fats is the narrow melting range, e.g. for Toffix® 34 - 36°C. Melting points may vary between 30 and 60°C, preferably between 35 and 45°C. An advantage of such preparations is the fact that, if necessary, more viscous preparations can easily be liquified by slightly warming up to a relatively low temperature. Fats in a ready to use emulsion are used in amounts of 3 - 25%, preferably 3 - 10%. Amounts of fat in a concentrated emulsions may vary between 10% and 60%.

Co-emulsifiers are used to improve the physical stability of the emulsion and also to improve the "cosmetic aspect" of the coating. Co-emulsifiers may be in amounts up to 20%, preferably 2 - 10%. A very suitable co-emulsifier is a sucrose-ester, e.g. sucrose ester of palm kernel oil known under the brand name of Celynol® (Rhône Poulenc). Other suitable co-emulsifiers are mono- and diglycerides of fatty acids or mixtures thereof, e.g. types known under the brand name of Imwitor® (Dynamite Nobel).

Emulsions of a sugar ester and a fatty acid are described in French patent 2 371 149. That patent provides a composition of predominantly sucroglycerides as an emulsion for coating of fruits in order to slow down the ripening process. No mold inhibitors or other active substances are used.

In the composition according to the present invention such sucroglycerides are only used as, optional, co-emulsifiers.

Suitable thickening agents are for instance gelatin, chitosan, pectin, alginates, tragacanth, and modified cellulose (e.g. hydroxypropyl cellulose or carboxymethyl cellulose). These agents may be used in amounts of 1 - 10%.

Optionally a buffering system may be added to stabilize the pH of the emulsion on a value of approximately 4.5. A suitable buffering system is for instance a mixture of citric acid and trisodium citrate. A preservative is added to prevent bacterial growth in the emulsion. A suitable preservative is e.g. sorbic acid. Optionally glycerol may also be added to enhance the firmness of the coating after application and drying of the emulsion. Suitable amounts vary from 1 to 5%.

The invention is particularly suitable for the formulation of natamycin and provides an excellent antifungal coating after application on food and on agricultural products. Natamycin is only active when it is in an available phase i.e. in solution. In aqueous systems the solubility of natamycin ranges from 30 - 50 ppm (parts per million), depending of the presence of other substances. However, in order to be effective against fungus growth the minimal inhibitory concentration is less than 10 ppm. Accordingly, at least 3 - 5 times the concentration needed would usually be available in solution.

Moreover, natamycin in solution is susceptible to inactivation by degradation (e.g. by oxidation, hydrolysis, photolysis). By adapting the concentration to the minimal inhibitory level, the inactivation is minimized and the time of effective activity of the active ingredient will be extended. In the composition according to the invention, the antifungal substance is released and maintained in solution at a minimal inhibitory concentration, thereby considerably enhancing and extending the effective antifungal activity of the composition. This is demonstrated in Figure 1. The dissolution rate was measured in a two-compartment cell separated by a membrane. The composition of the invention was put in one compartment, while a flow of solvent was maintained in the other cell, as a consequence of which the antifungal substance by diffusion through the membrane was "extracted" from the composition. Concentration of the dissolved antifungal was determined by methods known in the art.

The composition according to the invention may be prepared by the usual methods for emulsifying systems. E.g.: fats and fat soluble ingredients including sorbic acid are melted at a temperature of 70 - 80°C. Water soluble ingredients are dissolved in the water, this solution is also heated to a temperature of 70 - 80°C and the active ingredient (e.g. natamycin) is suspended in the hot solution. Both liquids are thoroughly mixed by means of a Turrax® mixer. After mixing, the emulsion is brought to ambient temperature by forced cooling and slow stirring to prevent foaming. Optionally the active ingredient may be added to the cooled emulsion, e.g. just before application.

The following examples will serve as illustration and should not be considered as a limitation of the invention.

### Example 1

Toffix® P (50 g) and Celynol F1® (5 g) were melted together at a temperature of 70 - 80°C.

Cetomacrogol® 1000 (5 g) was dissolved in water (940 g). This solution was heated to 70 - 80°C and then added to the melt. Subsequently the mass was thoroughly mixed with a Turrax® mixer during 5 minutes. After that the emulsion was cooled down (forced cooling) to ambient temperature. During the cooling time the emulsion was stirred slowly without drawing a vortex to prevent foaming.

The result was a low viscous milky liquid.

### Example 2

The same procedure as described in Example 1 was followed, except that before heating to 70 - 80°C gelatin (5 g) was also added to the water phase.

The result was a low viscous milky liquid.

### Example 3

The procedure of Example 1 was repeated, except that before heating to 70 - 80°C Klucel® LF, carboxymethyl cellulose, (5 g) was also added to the water phase.

The result was a low viscous milky liquid.

### Example 4

The procedure of Example 1 was repeated, except that an optional amount of natamycin (e.g. 8 g) was added to the hot water phase before mixing with the hot melt.

The result was a low viscous milky liquid.

### Example 5

The procedure of Example 2 was repeated, except that 8 g of natamycin was added to the hot water phase before mixing with the hot melt.

The result was a low viscous milky liquid.

### Example 6

The procedure of Example 3 was repeated, except that 8 g of natamycin was added to the hot water phase before mixing with the hot melt.

The result was a low viscous milky liquid.

### Example 7

Witocan® 42/44 (50 g) and Celynol® F1 (5 g) were melted together at a temperature of 70 - 80°C.

Cetomacrogol® 1000 (5 g) was dissolved in water (940 g). This solution was heated to 70 - 80°C and then added to the melt. Subsequently the mass was thoroughly mixed with a Turrax® mixer during 5 minutes. After that the emulsion was cooled down (forced cooling) to ambient temperature. During the cooling time the emulsion was stirred slowly without drawing a vortex to prevent foaming

The result was a low viscous milky liquid.

### Example 8

The procedure of Example 7 was repeated, except that an optional amount of natamycin (e.g. 8 g) was added to the hot water phase before mixing with the hot melt.

The result was a low viscous milky liquid.

### Example 9

The procedure of Example 7 was followed, but before heating to 70 - 80°C gelatin (5 g) was added to the water phase. Furthermore, 8 g of natamycin was added to the hot water phase before mixing with the hot melt.

The result was a low viscous milky liquid.

### Example 10

Witepsol® S55 (50 g) and Celynol® F1 (5 g) were melted together at a temperature of 70 - 80°C.

Cetomacrogol® 1000 (5 g) and carboxymethyl cellulose (5 g) were dissolved in water (940 g).

This solution was heated to 70 - 80°C and then added to the melt. Subsequently the mass was thoroughly mixed with a Turrax® mixer during 5 minutes. After that the emulsion was cooled down (forced cooling) to ambient temperature. During the cooling time the emulsion was stirred slowly without drawing a vortex to prevent foaming.

The result was a low viscous milky liquid.

### Example 11

The procedure of Example 10 was repeated, except that an optional amount of natamycin (e.g. 8 g) was added to the hot water phase before mixing with the hot melt.

The result was a low viscous milky liquid.

### Example 12

Toffix® P (50 g), Celynol® F1 (5 g) and sorbic acid (5 g) were melted together at a temperature of 70 - 80°C.

Cetomacrogol® 1000 (10 g), citric acid monohydrate (1.16 g) and trisodiumcitrate dihydrate (1.84 g) were dissolved in water (940 g).

This solution was heated to 70 - 80°C and then natamycin (8 g) was suspended in the warm solution. The natamycin suspension was added to the melt and subsequently thoroughly mixed with a Turrax® mixer during 5 minutes.

After that the emulsion was cooled down (forced cooling) to ambient temperature. During the cooling time the emulsion was stirred slowly without drawing a vortex to prevent foaming.

The result was a low viscous milky liquid.

### Example 13

The procedure of Example 12 was repeated except that the solid fat Toffix® P was replaced by Witocan® 42/44 (50 g).

The result was a low viscous milky liquid.

### Example 14

The components and the manufacturing procedure were the same as described in Example 12, however the resulting emulsion was a concentrated emulsion. The amounts in the emulsion were:
- Toffix® P (250 g), Celynol® F1 (25 g) and sorbic acid (5 g)
- Cetomacrogol® 1000 (50 g), citric acid monohydrate (5.8 g) and trisodiumcitrate (9.2 g)
- natamycin (40 g)
- water (640 g)
The result was a moderately viscous milky liquid.

### Example 15

The procedure according to Example 14 was repeated, but instead of Cetomacrogol® 1000, Tween® 61 (50 g) was used as the emulsifier. Tween® 61 is polyoxyethylene 4 sorbitan monostearate.

The result was a moderately viscous milky liquid.

### Example 16

The procedure according to Example 14 was repeated, but instead of Cetomacrogol® 1000, sodium lauryl sulphate (25 g) was used as the emulsifying agent.

The result was an emulsion with a creamy appearance.

### Example 17

A concentrate of butter fat (250 g), Celynol® F1 (25 g) and sorbic acid (5 g) were melted together at a temperature of 70 - 80°C. Cetomacrogol® 1000 (50 g), citric acid monohydrate (5.8 g) and trisodiumcitrate dihydrate (9.2 g) were dissolved in water (640 g). This solution was heated to 70 - 80 °C and then natamycin (40 g) was suspended in the warm solution.

The natamycin suspension was added to the melt and subsequently thoroughly mixed with a Turrax® mixer during 5 minutes.

After that the emulsion was cooled down (forced cooling) to ambient temperature. During the cooling time the emulsion was stirred slowly without drawing a vortex to prevent foaming.

The result was a moderately viscous milky liquid.

### Example 18

The procedure according to Example 17 was repeated, but instead of Cetomacrogol® 1000, Tween® 65 (50 g) was used as the emulsifier. Tween® 65 is polyoxyethylene 20 sorbitan tristearate.

The result was an emulsion with creamy appearance.

### Example 19

Toffix® P (100g), Celynol® F1 (5 g) and sorbic acid (5 g) were melted together at a temperature of 70 - 80°C.

Sodiumcaseinate (100 g) was dissolved in water (780 g). This solution was heated to 70 - 80°C and then natamycin (8 g) was suspended in the warm solution.

The natamycin suspension was added to the melt and subsequently the mass was thoroughly mixed with a Turrax® mixer during 5 minutes.

After that the emulsion was cooled down (forced cooling) to ambient temperature. During the cooling time the emulsion was stirred slowly without drawing a vortex to prevent foaming.

The result was a moderately viscous milky liquid.

### Example 20

Witepsol® S55 (50 g) and Imwitor® 742 (5 g) were melted together at a temperature of 70 - 80°C.

Cetomacrogol® 1000 (5 g) was dissolved in water (940 g). This solution was heated to 70 - 80°C and then added to the melt. Subsequently, the mass was thoroughly mixed with a Turrax® mixer during 5 minutes. After that the emulsion was cooled down (forced cooling) to ambient temperature. During the cooling time the emulsion was stirred slowly without drawing a vortex to prevent foaming.

The result was a low viscous milky liquid.

### Example 21

A concentrate of butter fat (250 g) was melted at a temperature of 60-70 °C. Whey protein (260 g), glycerol (50 g) and potassium sorbate (5 g) were dissolved in water (427 g). This suspension was heated to 60-70 °C and natamycin (8 g) was added to the warm solution. The melted butter fat was then added to the warm aqueous suspension and subsequently thoroughly mixed during 5 minutes by means of a Turrax® mixer.

After that the emulsion was cooled down to ambient temperature by forced cooling. During cooling the mass was stirred slowly without drawing a vortex to prevent foam formation.

The result was a pourable yellowish viscous liquid.

### Example 22

In the following experiment the effect on mould prevention on the surface of cheese of a composition according to the invention was compared to that of plasticoat and an aqueous suspension of natamycin.

A freshly brined wheel of Gouda cheese was cut horizontally into two parts. Each part was then cut into pieces of 5 by 5 by 5 cm. Only pieces with a flat original surface were taken for the experiment.

The original surface area (the rind) was then inoculated with about 10⁵ CFU of a mixture of equal amounts of spores of *Aspergillus versicolor, Penicillium verrucosum* var. *verrucosum*, and *Pencillium verrucosum* var. *cyclopium*. The inoculation was performed by applying 0.15 ml of a spore suspension containing about 10⁶ CFU/ml to the surface of the pieces of cheese.

After 12-hours' incubation at about 6°C, the pieces of cheese were treated with the different compositions. For each treatment 10 pieces of cheese were taken. The treatment was performed by immersion of the pieces of cheese one by one into the parent liquid compositions. For this purpose each liquid composition was put into a beaker of 1000 ml. To make the viscous plastic emulsion suitable as an immersion liquid it was first diluted by mixing 2 parts of it with 3 parts of water.

By weighing of the beaker containing the dipping liquid before and after the immersion of the pieces of cheese the amount of liquid applied to the cheese can be determined. With the known surface area of the pieces of cheese and the known concentration of the natamycin the amount of natamycin applied can be calculated. After treatment the pieces of cheese were incubated at 15°C and at a relative humidity of 95%.

The results are summarized in Figures 2, 3, 4 and 5. Composition A and Composition B, as indicated in the figures, are compositions according to the invention. Natamycin contents of these compositions and natamycin applied per dm² of cheese surface are shown in Table 1.

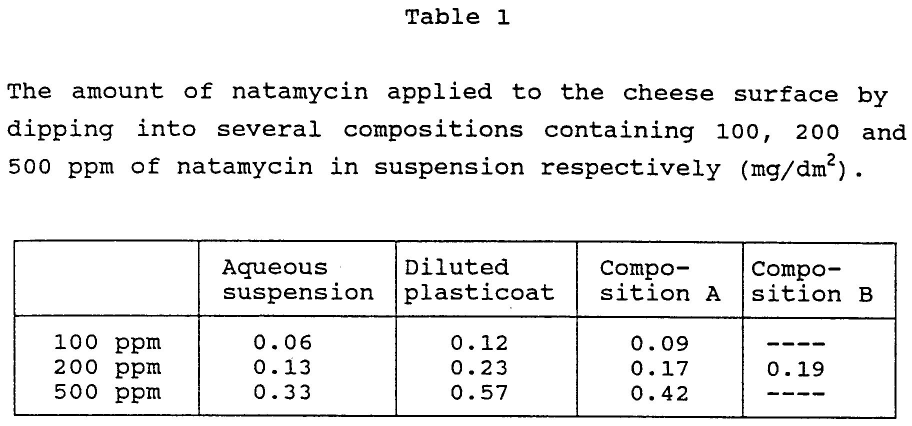

The basic compositions of A and B are as follows:

| | A | B |
|---|---|---|
| Toffix® P | 50 g | 50 g |
| Celynol® F1 | 5 g | 5 g |
| Cetomacrogol® 1000 | 5 g | -- |
| Tween® 60 | -- | 5 g |
| Citric acid mono hydrate | 1.16 g | 1.16 g |
| Trisodium citrate dihydrate | 1.84 g | 1.84 g |
| Sorbic acid | 5 g | 5 g |
| Water | 940 g | 940 g |

The treatment with a composition according to the invention resulted in a considerably more effective suppression of mould growth than a similar treatment by plasticoat or by a plain aqueous suspension with similar contents of natamycin. This result is the more surprising in considering the amounts of natamycin actually applied to the cheese.

### Example 23

This example demonstrates the effect on the amounts of bloomers of flowerbulbs when treated with a composition according to the invention as compared to that of a treatment with an aqueous suspension of natamycin. 700 Flower bulbs (*Lilium longiflorum*) were divided into 35 portions of 20 bulbs each. 15 Portions were inoculated by immersion in a spore suspension containing 2x10⁵ CFU/ml of a mixture of *Penicillium* species. These species were obtained by cultivation of spores isolated from bulbs contaminated with green mold. The bulbs were covered with plastic sheets and then stored at 20°C in the usual manner. After one week of incubation the bulbs were treated according to the following scheme.

| Item No. | Inoculated | Treatment with |
|---|---|---|
| 1A to 1E | no | Nothing |
| 2A to 2E | no | Composition C |
| 3A to 3E | no | Composition D |
| 4A to 4E | no | Nothing |
| 5A to 5E | yes | Nothing |
| 6A to 6E | yes | Composition C |
| 7A to 7E | yes | Composition D |

Thus each treatment consisted of 5 items of 20 bulbs. The flower bulbs were treated by means of immersion in the parent liquid compositions.

Composition C is a 4:1 (w/w) mixture of water and the composition according to example 14. Composition C thus contained 0.8% of natamycin.

Composition D is a suspension of 0.8% of natamycin in water.

After the treatments the bulbs were successively stored 2 weeks at 20°C and 8 weeks at 2°C. Then the bulbs were planted in a glass house and after 6 months of growing the items were assessed on the amount of blooming plants.

The results are summarized in Table 2.

**Table 2**

| Percentage of bloomers | | | | | | |
|---|---|---|---|---|---|---|
| Treatment Nr | A | B | C | D | E | Average |
| 1 | 60 | 45 | 45 | 45 | 35 | 46.0 ± 8.9 |
| 2 | 85 | 60 | 100 | 80 | 80 | 81.0 ± 14.3 |
| 3 | 50 | 70 | 45 | 55 | 40 | 52.0 ± 11.5 |
| 4 | 55 | 70 | 30 | 55 | 30 | 48.0 ± 17.5 |
| 5 | 45 | 25 | 55 | 20 | 30 | 35.0 ± 14.6 |
| 6 | 85 | 60 | 70 | 80 | 70 | 73.0 ± 9.7 |
| 7 | 55 | 45 | 60 | 40 | 45 | 49.0 ± 8.2 |

The table showed that a treatment with a composition according to the invention (2 and 6) gave better results than no treatment (1, 4 and 5) or a comparable treatment without such a composition (3 and 7).

## Claims

1. An oil in water emulsion, the oil phase of the emulsion is composed of fats with a melting range between 30°C and 60°C, which comprises a suitable emulsifier, optionally a suitable co-emulsifier, and at least one suitable antifungal agent, whereby the antifungal agent is in suspension in the waterphase and the amount of fat is 3 to 25% and 10 to 60% for ready to use and concentrated emulsions respectively.

2. An oil in water emulsion according to claim 1, characterized in that the antifungal agent is natamycin.

3. An oil in water emulsion according to claim 1, characterized in that the emulsifier used is selected from a group consisting of a polyethylene alkyl ether and an anionic tenside.

4. An oil in water emulsion according to claim 1, characterized in that the co-emulsifier used is selected from a group consisting of a sucrose ester, and a mono- or diglyceride of a fatty acid.

5. An oil in water emulsion according to claim 1, whereby the fat is butter fat and/or the emulsifier is sodium caseinate or whey protein.

6. A process for making emulsions comprising the steps of melting suitable solid fats at elevated temperatures optionally with the suitable co-emulsifier, adding an aqueous solution of the emulsifier, and/or thickening agents and the buffer, heated at an elevated temperature, to the melt, together with the antifungal agent suspended in the aqueous solution or adding the antifungal agent afterwards to produce the emulsion according to any one of claims 1 to 5.

7. A process for inhibiting or suppressing superficial growth of moulds or fungi on the surface of foods or agricultural products or on human or animal skin by treating the surface of such foods or agricultural products or treating human or animal skin with the emulsion according to any one of claims 1 - 5.

8. Foods or agricultural products treated according to claim 7.

## Patentansprüche

1. Oel-in-Wasser-Emulsion, deren Oelphase aus Fetten mit einem Schmelzbereich zwischen 30°C und 60°C besteht, welche Emulsion einen geeigneten Emulgator, gegebenenfalls einen geeigneten Co-Emulgator und mindestens ein geeignetes Fungizid enthält, wobei das Fungizid in der wässrigen Phase suspendiert ist und die Fettmenge 3 bis 25% für gebrauchsfertige bzw. 10 bis 60% für konzentrierte Emulsionen beträgt.

2. Oel-in-Wasser-Emulsion nach Anspruch 1, dadurch gekennzeichnet, dass das Fungizid Natamycin ist.

3. Oel-in-Wasser-Emulsion nach Anspruch 1, dadurch gekennzeichnet, dass der verwendete Emulgator aus der Gruppe gewählt ist, welche aus einem Polyethylen-alkylether und einem anionischen Tensid besteht.

4. Oel-in-Wasser-Emulsion nach Anspruch 1, dadurch gekennzeichnet, dass der verwendete Co-emulgator aus einer Gruppe gewählt ist, welche aus einem Saccharose-ester und einem Fettsäure-monoglycerid oder -diglycerid besteht.

5. Oel-in-Wasser-Emulsion nach Anspruch 1, wobei das Fett Butterfett und/oder der Emulgator Natriumcaseinat oder Weizenprotein ist.

6. Verfahren zur Herstellung von Emulsionen, gekennzeichnet durch folgende Stufen: das Schmelzen von geeigneten festen Fetten bei erhöhter Temperatur, gegebenenfalls zusammen mit dem geeigneten Co-emulgator, das Zugeben einer wässrigen, auf erhöhter Temperatur erhitzten Lösung des Emulgators und/oder von Verdickungsmitteln und des Puffers zur Schmelze, zusammen mit dem in der wässrigen Lösung suspendierten Fungizid, oder das nachträgliche Zugeben des Fungizids, um die Emulsion nach einem der Ansprüche 1 bis 5 zu erhalten.

7. Verfahren zur Hemmung oder Unterdrückung des Oberflächenwachstums von Pilzen oder Fungi an der Oberfläche von Nahrungsmitteln oder landwirtschaftlichen Produkten oder auf der Human- oder Tierhaut, bei welchem die Oberfläche solcher Nahrungsmittel oder landwirtschaftlicher Produkte oder die Human- oder Tierhaut mit der Emulsion nach einem der Ansprüche 1 bis 5 behandelt wird.

8. Nahrungsmittel oder landwirtschaftliche Produkte, welche nach Anspruch 7 behandelt worden sind.

## Revendications

1. Emulsion huile-dans-eau, la phase huileuse de l'émulsion est composée de graisses ayant un intervalle de fusion entre 30°C et 60°C, qui comprend un émulsifiant approprié, facultativement un agent de coémulsification approprié et au moins un agent antifongique approprié, où l'agent antifongique est en suspension dans la phase aqueuse et la quantité de graisse se situe entre 3 et 25% et 10 et 60% pour les émulsions prêtes à l'emploi et concentrées, respectivement.

2. Emulsion huile-dans-eau suivant la revendication 1, caractérisée en ce que l'agent antifongique est la natamycine.

3. Emulsion huile-dans-eau suivant la revendication 1, caractérisée en ce que l'émulsifiant utilisé est choisi parmi un groupe consistant en un alcoyléther de polyéthylène et d'un tensioactif anionique.

4. Emulsion huile-dans-eau suivant la revendication 1, caractérisée en ce que l'agent de coémulsification utilisé est choisi parmi un groupe consistant en un ester de sucrose et un mono- ou diglycéride d'un acide gras.

5. Emulsion huile-dans-eau suivant la revendication 1, dans laquelle la graisse est de la graisse de beurre et/ou l'émulsifiant est du caséinate de sodium ou de la protéine de petit-lait.

6. Procédé de préparation d'émulsions comprenant les étapes de fusion des graisses solides appropriées à températures élevées, facultativement avec l'agent de coémulsification approprié, d'addition d'une solution aqueuse de l'émulsifiant et/ou d'agents épaississants et du tampon, chauffée à une température élevée, à la masse fondue, ainsi que l'agent antifongique mis en suspension dans la solution aqueuse ou d'addition de l'agent antifongique ensuite, pour produire l'émulsion suivant l'une quelconque des revendications 1 à 5.

7. Procédé d'inhibition ou de suppression de la croissance de moisissures ou de champignons superficiels à la surface de produits alimentaires ou agricoles ou sur la peau d'humains ou d'animaux, par traitement de la surface de tels produits alimentaires ou agricoles ou par traitement de la peau d'humains ou d'animaux au moyen de l'émulsion suivant l'une quelconque des revendications 1 à 5.

8. Produits alimentaires ou agricoles traités suivant la revendication 7.
